# EUROPÄISCHE PATENTSCHRIFT

(11) **EP 0 436 523 B1**
(45) Veröffentlichungstag und Bekanntmachung des Hinweises auf die Patenterteilung: **29.03.1995**
(21) Anmeldenummer: 91890001.0
(22) Anmeldetag: 07.01.1991
(51) Int. Cl.: F24J 2/36, F24J 2/26, F28F 3/12, E01C 13/00, E01C 11/26

(54) **Verwendung eines Wärmetauschers**
Use of a heat exchanger
Utilisation d'un échangeur de chaleur

(30) Priorität: 05.01.1990 AT 22/90
(43) Veröffentlichungstag der Anmeldung: 10.07.1991
(73) Patentinhaber: Solkav Solartechnik GmbH, A-3150 Wilhelmsburg (AT)
(72) Erfinder: Hakim-Elahi, Parviz, A-3150 Wilhelmsburg, Niederösterreich (AT)
(74) Vertreter: Casati, Wilhelm, Dipl.-Ing.

(56) Entgegenhaltungen:
- EP-A- 0 130 502
- EP-A- 0 210 285
- DE-A- 2 624 868
- DE-A- 3 100 386
- DE-A- 3 609 186
- FR-A- 1 586 890

## Beschreibung

Gegenstand der Erfindung ist die Verwendung eines wickelbaren Wärmetauschers mit zueinander parallelen Strömungskanälen für das Wärmeträgermedium, die durch elastische Stege miteinander verbunden sind, auf welchen die Strömungskanäle insbes. eben abdeckend, sich über den Strömungskanalquerschnitt hinaus erstreckende Füllmasse aufgebracht ist, welche aus biegbarem (elastischem) Material besteht, welches das Wickeln nicht behindert und die Räume zwischen den kanälen füllt, zum Abdecken einer Fläche und/oder zum Überspannen von Hohlräumen, insbes. als Sport- bzw. Erholungsfläche. Dadurch, daß die Räume zwischen den Rohren oberhalb der Stege mit biegbarer (elastischer) Masse gefüllt sind, die sich noch einige Millimeter über den Rohrquerschnitt hinaus erstreckt, somit die Rohre überragt, wird es ermöglicht, Flächen, die bisnun ausschließlich zur Unterbringung des Wärmetauschers in Form eines Solarkollektors gedient haben, gleichzeitig für andere Zwecke, z.B. für das Tennisspiel, Volleyballspiel und andere Spiele oder auch als Liegewiese zu nutzen, ohne daß es nach dem Installieren des Wärmetauschers noch besonderer Abdeckungsarbeiten für die Strömungskanäle bedürfte. Die Wärmetauscher können auch Hohlräume überspannen oder auch zur Verkleidung von Fassaden, also zum Abdecken von Fassadenflächen Verwendung finden. Die Stege, welche die Strömungskanäle mechanisch verbinden, ergeben ausreichende Festigkeit und Formstabilität für die ausgebreitete Matte.

Die EP-A-0 130 502 zeigt die Verwendung eines wickelbaren Wärmetauschers mit zueinander parallelen Strömungskanälen für das Wärmeträgermedium, die durch elastische Stege miteinander verbunden sind.

Die US-A-42 94 078 offenbart wickelbare Wärmetauschermatten, bei welchen ein Vlies aus gummiertem Roßhaar zum Abdecken der Strömungskanäle Verwendung findet. Dieses Vlies füllt nicht die Räume zwischen den Kanälen, sondern liegt nur am höchsten Punkt des Querschnittes des Strömungskanales an. Die bekannten Wärmetauscher werden als Wickel in einem Gefäß verwendet, das mit einem Medium gefüllt ist, das in dem Temperaturbereich, in welchem der Wärmetauscher arbeitet, seinen Phasenzustand ändert, wobei davon Gebrauch gemacht wird, daß während der Phasenänderung große Wärmemengen freiwerden oder aber gebunden werden, je nach der Richtung, in der der Phasenwechsel abläuft. Die Roßhaarschicht dient dabei als Distanzhalter für die einzelnen Windungen des Wickels.

Durch die DE-OS 36 43 668 wurde eine Vorrichtung zum Speichern und/oder Übertragen von Wärme, mit wenigstens einer Leitung zur Führung eines Wärmeträgermediums, welche in bzw. an einem, wenigstens eine der Wärmeübertragung zwischen Umgebung und einem Wärmeträgermedium dienende Außenfläche aufweisenden, eine Tragfunktion für die Leitung erfüllenden Grundkörper geführt ist, bekannt. Der Grundkörper kann als bahn- bzw. mattenartiges, wickelfähiges Material ausgebildet sein. Der Grundkörper weist wenigstens eine Schicht aus einem betonartigen, zumindest teilweise polymer gebundenen Werkstoff auf, in welches die Leitung geführt bzw. mit welcher die Leitung in wärmeleitendem Kontakt steht, wobei die der Wärmeübertragung dienende Außenfläche zumindest teilweise durch diese Schicht gebildet wird. Eine Außenfläche des Grundkörpers kann auch mit einer Schicht aus wärmedämmendem Material überdeckt sein. Da der Grundkörper wickelfähig ist, sind die in diesen integrierten Leitungen aus einem Kunststoff entsprechender Elastizität ausgebildet. Der Zement-Polymer Beton läßt sich quasi gummielastisch einstellen und ist auf diese Weise praktisch beliebigen geometrischen Formen anpaßbar. Die bekannte Vorrichtung, die als Heiz- bzw. Kühlelement Verwendung finden kann, ist für ein Begehen nicht vorgesehen. Der betonartige Werkstoff der bekannten Vorrichtung weist gute Klebeeigenschaften auf. Dies soll der Verbindung der aus dem betonartigen Werkstoff gebildeten Bauteile untereinander zu größeren Bauelementen förderlich sein. Aufgrund der günstigen Klebartigkeit soll die bekannte Vorrichtung auch den Vorteil besitzen, leicht mit Fliesen überzogen werden zu können.

In Weiterbildung der erfindungsgemäßen Verwendung sind die Stege an der der Füllmasse gegenüberliegenden Seite mit einer Isolierschicht versehen, deren freie Oberfläche insbesondere eine ebene Fläche ist. Dadurch wird ein Wärmeaustausch zwischen dem in den Strömungskanälen befindlichen Medium und der Unterlage, auf welcher die Matte ausgerollt wurde, behindert. Bevorzugt sind bei der erfindungsgemäßen Verwendung des Wärmetauschers zwei Strömungskreise, jeweils gebildet von mehreren Strömungskanälen, vorgesehen, die alternativ mit Wärmeträgermedium, z.B. Wasser, oder mit Kältemittel, z.B. Sole, beschickbar sind. Damit wird dem Betreiber des Wärmetauschers ermöglicht, ein Freibad im Sommer über den dann als Solaranlage arbeitenden Wärmetauscher zu beheizen und im Winter auf der selben Fläche eiszulaufen und jeweils eine Sportart noch zusätzlich zu betreiben, etwa Tennis, Volleyball oder andere Ballspiele. Die Fläche kann jedoch auch zu Liegezwecken Verwendung finden.

Die einzelnen Strömungskanäle des mit dem Wärmeträgermedium beaufschlagbaren Strömungskreises sind abwechselnd mit den einzelnen Strömungskanälen des mit dem Kältemittel beaufschlagbaren Strömungskreises angeordnet. Durch die erfindungsgemäße Verwendung eines Wärmetauschers wird eine dreifache Nutzung der vom Wärmetauscher eingenommenen Fläche erreicht, nämlich alternativ als Eisfläche oder als Erhitzungsfläche für den Wärmeträger in den Kanälen im Sommer und als Nutzfläche für Sport (Eiskunstlauf, Ballspiele) und Erholung.

Anhand der Zeichnung wird die erfindungsgemäße Verwendung eines Wärmetauschers beispielsweise näher erläutert. Es ist in
Fig. 1 schematisch ein Anschlußplan für den Wärmetauscher dargestellt.
Fig. 2 ist ein Schnitt nach Linie II-II der Fig. 1, wobei jedoch die Füllmasse, die in Fig. 1 nicht dargestellt ist, eingezeichnet wurde.

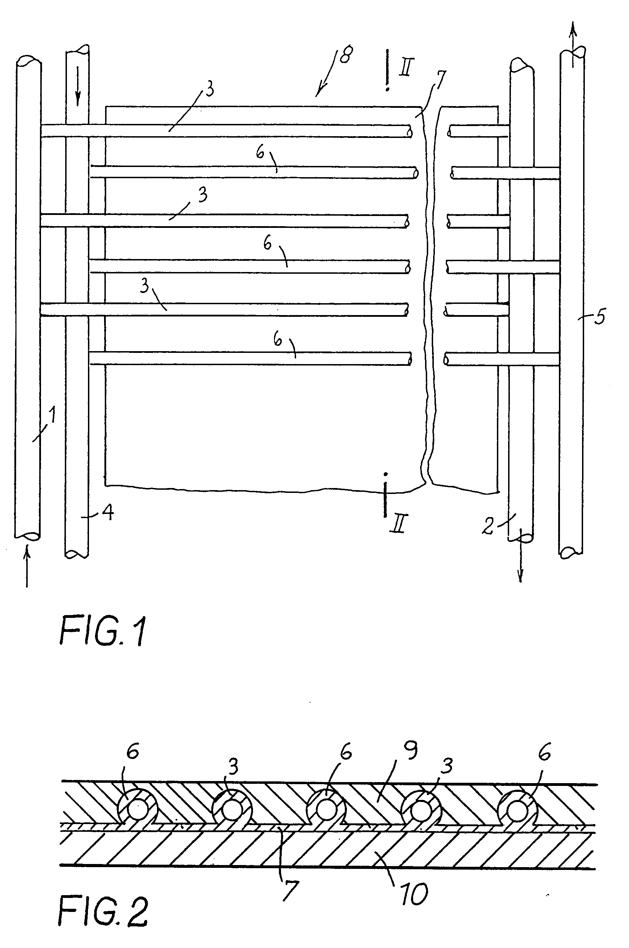

In der Zeichnung ist mit 1 die Zuleitung für das Wärmeträgermedium zur Gewinnung von Wärmeenergie und mit 2 die Ableitung für das durch Sonnenenergie erwärmte Wärmeträgermedium bezeichnet, wobei das Wärmeträgermedium durch von Schläuchen oder Rohren gebildete Strömungskanäle 3 fließt. 4 ist die Zuleitung für das Kältemittel, z.B. Sole und 5 die Ableitung für dasselbe, wobei die beiden Leitungen 4, 5 durch gleichfalls durch Schläuche oder Rohre gebildete Strömungskanäle 6 miteinander verbunden sind. Wie aus Fig. 2 ersichtlich, stehen die die Strömungskanäle 3, 6 bildenden Schläuche durch parallel zur Längsachse verlaufende, etwa tangential außen angebrachte Stege 7 mechanisch in Verbindung, so daß sich ein mattenförmiger und frostsicherer Wärmetauscher 8 ergibt.

Die Rohre sind, wie Fig. 2 erkennen läßt, in einer auf die Stege 7 aufgebrachten Füllmasse 9 eingebettet. Auf der die Füllmasse 9 tragenden Seite der Stege 7 gegenüberliegenden Seite ist eine Isolierung 10 befestigt.

Die Leitungen 1 und 2 sind an einem Wärmekreislauf zur Bereitung von Warmwasser, z.B. Wasser eines Schwimmbades, angeschlossen, wobei in diesem Fall das Schwimmbadwasser zur Erwärmung direkt, also ohne Zwischenwärmeträger, durch den Wärmetauscher geschickt werden kann.

Die Leitungen 4 und 5 stehen mit dem Kältekreislauf einer Kältemaschine in Verbindung und werden von letzterer mit kaltem Kältemittel, z.B. unterkühlter Sole, beschickt.

Im Sommer wird dabei nur der Wärmekreislauf über die Leitungen 1 und 2 betrieben, wobei der Kältekreislauf stillgelegt ist, im Winter hingegen nur der Kältekreislauf über die Leitungen 4 und 5, wobei dann der Wärmekreislauf stillgelegt ist. Der Innendurchmesser der Schläuche bzw. Rohre 3 kann 7 mm und die Wandstärke 1,6 mm betragen. Die Schläuche bzw. Rohre 6 können gleich wie die Rohre 3 bemessen sein, sie können jedoch auch einen geringeren Innendurchmesser von z.B. 5,2 mm bei einer etwas größeren Wandstärke von z.B. 1,7 mm aufweisen. Die Stärke der Stege kann 1,8 mm betragen.

## Patentansprüche

1. Verwendung eines wickelbaren Wärmetauschers mit zueinander parallelen Strömungskanälen (3, 6) für das Wärmeträgermedium, die durch elastische Stege (7) miteinander verbunden sind, auf welchen die Strömungskanäle (3, 6) insbes. eben abdeckende, sich über den Strömungskanalquerschitt hinaus erstreckende Füllmasse (9) aufgebracht ist, welch aus biegbarem (elastischem) Material besteht, welches das Wickeln nicht behindert und die Räume zwischen den Kanälen (3, 6) füllt, zum Abdecken einer Fläche und/oder zum Überspannen von Hohlräumen, insbes. als Sport- bzw. Erholungsfläche.

2. Verwendung nach Anspruch 1, wobei die Stege (7) an der der Füllmasse gegenüberliegenden Seite mit einer Isolierschicht (10) versehen sind, deren freie Oberfläche insbesondere eine ebene Fläche ist.

3. Verwendung nach Anspruch 1 oder 2, wobei zwei Strömungskreise, jeweils gebildet von mehreren Strömungskanälen (3 bzw. 6) vorgesehen sind, die alternativ mit Wärmeträgermedium, z.B. Wasser (Strömungskreise der Strömungskanäle (3)) oder mit Kältemittel, z.B. Sole (Strömungskreis der Strömungskanäle (6)) beschickbar sind.

4. Verwendung nach Anspruch 3, wobei die einzelnen Strömungskanäle (3) des mit dem Wärmeträgermedium beaufschlagbaren Strömungskreises abwechselnd mit den einzelnen Strömungskanälen (6) des mit dem Kältemittel beaufschlagbaren Strömungskreises angeordnet sind.

## Claims

1. Use of a windable heat exchanger with mutually parallel flow passages (3, 6) for the heat transfer medium which are connected together by elastic webs (7), on which a filling composition (9) is applied, which covers the flow passages (3, 6), in particular evenly, and extends beyond the flow passage cross-section, which comprises flexible (elastic) material, which does not prevent the winding and fills the spaces between the passages (3, 6), for covering a surface and/or for extending over hollow spaces, particularly as a sporting or recreational surface.

2. Use as claimed in Claim 1, whereby the webs (7) are provided on the surface opposite to the filling composition with an insulating layer (10) whose free surface is, in particular, a flat surface.

3. Use as claimed in Claim 1 or 2, whereby two flow circuits are provided, each constituted by a plurality of flow passages (3, 6, respectively), which are alternately fillable with heat transfer medium, e.g. water (flow circuit of the flow passages (3)) or with cooling medium, e.g. brine (flow circuit of the flow passages (6)).

4. Use as claimed in Claim 3, whereby the individual flow passages (3) of the flow circuit which may be acted upon with the heat transfer medium are arranged alternately with the individual flow passages (6) of the flow circuit which may be acted upon by the cooling medium.

## Revendications

1. Utilisation d'un échangeur de chaleur susceptible d'être enroulé, comportant des canaux d'écoulement parallèles entre eux (3, 6) pour le milieu caloporteur, qui sont reliés entre eux par des parties intermédiaires élastiques (7), sur lesquels canaux d'écoulement (3,6) est apposée une masse de remplissage (9) formant en particulier un recouvrement plat, s'étendant au-delà de la section des canaux d'écoulement, laquelle n'empêche pas l'enroulement et remplit les espaces entre les canaux, pour le recouvrement d'une surface et/ou la fermeture d'espaces creux, en particulier comme surface de sport et de détente.

2. Utilisation selon la revendication 1, dans laquelle les parties intermédiaires (7) sont munies, du côté opposé à la masse de remplissage, d'une couche isolante (10) dont la surface libre est une surface plane.

3. Utilisation selon la revendication 1 ou 2, dans laquelle deux circuits d'écoulement, constitués chacun de plusieurs canaux d'écoulement (3 ou 6) sont prévus, qui de manière alternée peuvent être alimentés avec un milieu caloporteur, par exemple de l'eau (circuits d'écoulement formé des canaux d'écoulement (3) ou avec un agent réfrigérant, par exemple de la saumur (circuit d'écoulement formé des canaux d'écoulement (6).

4. Utilisation selon la revendication 3, dans laquelle les différents canaux d'écoulement (3) du circuit d'écoulement remplissable avec le milieu caloporteur sont placés en alternance avec les différents canaux d'écoulement (6) du circuit d'écoulement remplissable avec l'agent réfrigérant.
